(19) Europäisches Patentamt / European Patent Office / Office européen des brevets

(11) **EP 4 575 942 A1**

(12) **EUROPEAN PATENT APPLICATION**

(43) Date of publication:
**25.06.2025  Bulletin 2025/26**

(21) Application number: **24190891.2**

(22) Date of filing: **25.07.2024**

(51) International Patent Classification (IPC):
**G06Q 10/04** $^{(2023.01)}$   **B60L 55/00** $^{(2019.01)}$
**G06Q 50/06** $^{(2024.01)}$   **H02J 3/00** $^{(2006.01)}$

(52) Cooperative Patent Classification (CPC):
**G06Q 10/04; B60L 55/00; G06Q 50/06;**
**H02J 3/322; H02J 7/007188;** H02J 2310/48;
H02J 2310/64

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.12.2023  KR 20230184511**

(71) Applicants:
• **Hyundai Motor Company**
  **Seoul 06797 (KR)**
• **Kia Corporation**
  **Seocho-gu**
  **Seoul 06797 (KR)**

(72) Inventors:
• **CHOI, Jeong Hoon**
  **Seoul (KR)**

• **KIM, Hyun Sup**
  **Seoul (KR)**
• **KIM, Kyoung Joo**
  **Seoul (KR)**
• **LEE, Min Kyu**
  **Seoul (KR)**
• **PARK, Bum Su**
  **Seoul (KR)**
• **KO, Dae Gun**
  **Seoul (KR)**
• **HAN, Hye Seung**
  **Seoul (KR)**
• **KIM, Sung Kyu**
  **Seoul (KR)**
• **JUNG, Jae Yun**
  **Seoul (KR)**

(74) Representative: **Viering, Jentschura & Partner mbB**
**Patent- und Rechtsanwälte**
**Am Brauhaus 8**
**01099 Dresden (DE)**

(54) **ELECTRIC VEHICLE CHARGING AND DISCHARGING SCHEDULING DEVICE AND METHOD CONSIDERING PARTICIPATION IN ELECTRIC POWER MARKET**

(57)   An electric vehicle charging and discharging scheduling method can include setting a scheduling model based on a constraint function and an objective function considering a contract for difference, smart charging, a plus demand response (DR), and a national DR, optimizing the set scheduling model, and performing electric vehicle charging and discharging scheduling using the optimized scheduling model. The constraint function can include a function for at least one of restrictions on charging/discharging for each electric vehicle. The objective function can include a regular scheduling function considering the contract for difference and the plus DR market, and an irregular scheduling function considering the contract for difference, the plus DR market, and a national DR market.

FIG. 1

**Description**

**CROSS-REFERENCE TO RELATED APPLICATIONS**

This application claims benefit of priority to Korean Patent Application No. 10-2023-0184511 filed on December 18, 2023 in the Korean Intellectual Property Office, the disclosure of which is incorporated herein by reference in its entirety.

**TECHNICAL FIELD**

The present disclosure relates to an electric vehicle charging and discharging scheduling device and method.

**BACKGROUND**

Recently, the spread of various distributed energy resources such as solar power generation, wind power generation, and Energy Storage Systems (ESSs) has been actively promoted, and simultaneously, Vehicle to Grid (V2G) technology, which enables not only charging of Electric Vehicle (EV) batteries, but also discharging of the battery energy to the power system, is emerging. If V2G technology is used to link with Vehicle to Home (V2H), Vehicle to Building (V2B) and the like, it is possible to reduce power bills and generate profits, and further contribute to stabilizing the power system.

In the case of V2G technology of the related art, there were respective functions to buy and sell power by using smart charging, participating in difference trading, and participating in the Demand Response (DR) market, but functions such as participating in multiple markets simultaneously or controlling smart charging and discharging simultaneously to generate optimal profits were not presented. For example, in the case of V2G technology of the related art, no method was proposed to optimize by simultaneously considering the savings from arbitrage transactions and the profits from participation in the DR market. In addition, most of the market participation strategies of existing demand management business operators participating in DR simply considered resource capacity. Therefore, in V2G technology, there is a need for technology that optimizes charging and discharging of batteries by considering various DR markets along with contract for difference and smart charging and discharging.

**SUMMARY**

The present disclosure relates to an electric vehicle charging and discharging scheduling device and method, considering participation in an electric power market.

An embodiment of the present disclosure can derive an optimal scheduling method by considering all of arbitrage transactions, smart charging, plus DR, and national DR.

According to an embodiment of the present disclosure, an electric vehicle charging and discharging scheduling method and an electric vehicle charging and discharging scheduling device are provided as follows.

According to an embodiment of the present disclosure, an electric vehicle charging and discharging scheduling method can include setting a scheduling model based on a constraint function and an objective function considering a contract for difference, smart charging, a plus demand response (DR), and a national DR, optimizing the set scheduling model, and performing electric vehicle charging and discharging scheduling using the optimized scheduling model. The constraint function can include a function for at least one of restrictions on charging/discharging for each electric vehicle, an upper limit on a charging/discharging amount considering a vehicle entry time, satisfaction of a customer-set target battery charging amount, prevention of a reversed power flow when applying Vehicle to Home (V2H), compliance with winning bid power when participating in a Plus DR market, restrictions on arbitrage services for resources directly connected to a grid, and recognition of an amount of reduction up to a customer baseline load power amount when participating in the national DR. The objective function can include a regular scheduling function considering the contract for difference and the plus DR market, and an irregular scheduling function considering the contract for difference, the plus DR market, and a national DR market.

According to an embodiment of the present disclosure, an electric vehicle charging/discharging scheduling device can include a processor, and a storage medium recording instructions for executing one or more programs configured to be executable by the processor. The one or more programs can include setting a scheduling model based on a constraint function and an objective function considering a contract for difference, smart charging, a plus Demand Response (DR), and a national DR, optimizing the set scheduling model, and performing electric vehicle charging and discharging scheduling using the optimized scheduling model. The constraint function can include a function for at least one of restrictions on charging/discharging for each electric vehicle, an upper limit on a charging/discharging amount considering a vehicle entry time, satisfaction of a customer-set target battery charging amount, prevention of a reversed power flow when applying Vehicle to Home (V2H), compliance with winning bid power when participating in a Plus DR market, restrictions on arbitrage services for resources directly connected to a grid, and recognition of an amount of reduction up to a customer baseline load power amount when participating in the national DR. The objective function can include a regular scheduling function considering the contract for difference and the plus DR market, and an irregular scheduling function considering the contract for difference, the plus DR market, and a national DR market.

## BRIEF DESCRIPTION OF THE DRAWINGS

The above and other embodiments, features, and advantages of the present disclosure can be more clearly understood from the following detailed description, taken in conjunction with the accompanying drawings, in which:

FIG. 1 is a diagram illustrating a structure of an electric vehicle charging and discharging system according to an embodiment of the present disclosure;

FIG. 2 is a flowchart of an electric vehicle charging and discharging scheduling method considering participation in an electric power market according to an embodiment of the present disclosure;

FIG. 3 is a flowchart of a scheduling model setting operation according to an embodiment of the present disclosure;

FIG. 4 is a block diagram of a computing device that may fully or partially implement a device according to an embodiment of the present disclosure;

FIG. 5 is a graph illustrating smart charging scheduling according to an embodiment of the present disclosure;

FIG. 6 is a graph illustrating contract-for-difference scheduling according to an embodiment of the present disclosure;

FIG. 7 is a graph illustrating scheduling when a national DR is issued according to an embodiment of the present disclosure; and

FIG. 8 is a graph illustrating scheduling when Plus DR is issued according to an embodiment of the present disclosure.

## DETAILED DESCRIPTION OF ILLUSTRATIVE EMBODIMENTS

Hereinafter, with reference to the attached drawings, example embodiments will be described in detail so that those skilled in the art may easily practice the present disclosure. However, when describing example embodiments in detail, if it is determined that a detailed description of a related known function or configuration may unnecessarily obscure the gist of the present disclosure, the detailed description can be omitted. In addition, same symbols can be used throughout the drawings for parts that perform similar functions and actions.

In addition, when a part is said to be 'connected' to another part throughout the specification, this includes not only cases where they are 'directly connected', but also cases where they are 'indirectly connected' with another element therebetween. In addition, 'including' a certain component means that other components may be further included rather than excluding other components, unless specifically stated to the contrary.

The present disclosure may be implemented in many different forms and is not limited to the example embodiments described herein.

In the present disclosure, a technology for deriving optimal charging and discharging scheduling of electric vehicles (EV), inducing participation in the market for contract for difference, smart charging and DR using Vehicle to Grid (V2G) technology, is proposed.

Contract for difference can refer to charging or discharging the battery by reflecting the power price that changes over time. Generally, charging can be done when the power price is low and discharging can be done when the power price is relatively expensive.

In addition, even if the device is not discharged, a smart charging function may be applied that intensively charges when the charge is low. Smart charging can be a technology reducing electricity bills by encouraging intensive charging during times when electricity rates are low in buildings and homes that use the Time of Use (ToU) rate system, where electricity rates vary depending on the time of day. By using the smart charging function, the energy required to reach the target State of Charge (SoC) when comes out, as compared with SoC when an electric vehicle comes in, may be concentrated at times when rates are relatively low.

In addition, the smart discharge function can refer to replacing the power used by the load by discharging the electric vehicle in a manner that does not cause reverse currents in homes and buildings and thus avoiding expensive power bills. However, the smart discharge function may be applied in structures where the building's power meter and the charging/discharging power of the electric vehicle may be combined.

The Demand Response (DR) market can refer to controlling the amount of power used on the consumer side, not on the electricity supplier side, and profits may be generated depending on the market settlement method and the amount of demand power response or adjustment. In addition, the DR market may include the plus DR market and the national DR market.

The Plus DR market can be a DR market in which profits are generated when additional power is used based on existing power usage. In more detail, the Plus DR market can be divided into a bid/successful bid market and a real-time market, and a successful bid or real-time market can be issued depending on the needs of the Korea Power Exchange. Based on SMP, which is the hourly settlement price, the algorithm can derive additional power or charging schedule for each electric vehicle.

The national DR market can be a DR market in which profits are generated when power is reduced based on existing power usage. The national DR market may only exist in real time (e.g., when an order is issued by the Korea Power Exchange), charging standby or discharging scheduling of electric vehicles may be derived to obtain a high settlement amount.

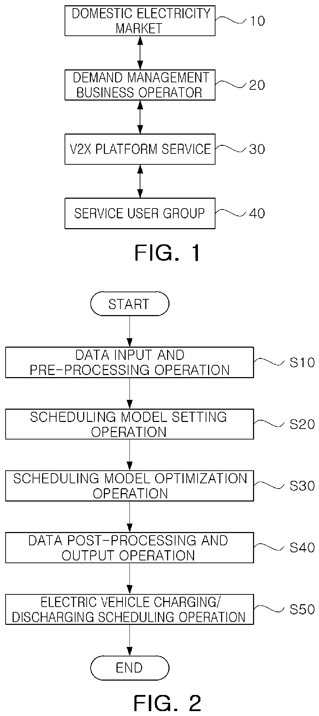

FIG. 1 is a diagram illustrating the structure of an electric vehicle charging and discharging system according to an embodiment of the present disclosure.

Referring to FIG. 1, the electric vehicle charging and discharging system according to an example embodiment may include a domestic electricity market 10, a demand management business operator 20, a V2X platform service 30, and a service user group 40.

The entity that operates the domestic electricity market 10 can be the Korea Power Exchange (KPX), for example, and a contract with KPX can be essential to participate in DR. KPX can operate various DR markets such as Plus DR, National DR, Frequency DR, and the like, and perform settlement according to the amount of DR participation in different ways according to the market settlement rules.

To directly participate in the DR market of the domestic electricity market 10, registration as a demand management business operator 20 may be required. According to the electric vehicle charging and discharging system according to an example embodiment, the V2X platform service 30 does not directly register as the demand management business operator 20, but may indirectly participate in DR by being incorporated into the resource group of the demand management business operator 20.

The V2X platform service 30 may directly manage the EVs, EV charging stations (EVCs), and the like, of customers participating in the V2X service, and may provide charging and discharging scheduling services for electric vehicles to derive optimal costs for the service user group by providing optimization software.

Additionally, the service user group 40 can be a customer who may register for the V2X platform service and participate in contract for difference, smart charging, and DR services according to optimized charging and discharging scheduling, and own an electric vehicle equipped with V2G technology. If customers do not have V2G technology, some markets may be restricted by the algorithm.

Below, the electric vehicle charging and discharging scheduling method and device considering participation in the power market provided by the V2X platform service 30 will be described in more detail.

FIG. 2 is a flowchart of an electric vehicle charging and discharging scheduling method considering participation in the electric power market according to an embodiment of the present disclosure.

Referring to FIG. 2, first, data for charging and discharging an electric vehicle may be input and the data may be preprocessed (operation S10). For example, input data may include the electric vehicle's current battery charge amount, a user-set target SoC, a preset allowable electric vehicle battery charging range, the building's expected load, and the like.

In addition, a scheduling model may be set based on constraint functions and objective functions that consider contract for difference, smart charging, plus DR, and national DR (operation S20).

Afterwards, the scheduling model may be optimized to significantly reduce power charges or significantly increase revenue using the constraint function and the objective function (operation S30), and the output data may be post-processed using the optimized scheduling model and the final data may be output (operation S40). Charging and discharging scheduling of electric vehicles may be performed using the final data output using the optimized scheduling model (operation S50).

Constraint functions used in the scheduling model can include at least one of a function for constraining charging/discharging for each electric vehicle, a function for upper limit on charging/discharging amount considering vehicle entry time, a function for satisfying customer-set target battery charging amount, a function to prevent reversed power flow when applying Vehicle to Home (V2H), a function to comply with the winning power when participating in the Plus DR market, a function to limit the contract-for-difference service for resources directly linked to the grid, and a function for recognizing reductions up to the customer baseline load power amount when participating in national DR.

The function for limiting charging/discharging for each electric vehicle can be configured to set charging decision variables and discharging decision variables according to the V1G or V2G type when the electric vehicle is in the parked state. If the electric vehicle is a V1G type, the charging decision variable can be set to be greater than or equal to 0 and less than or equal to 1, and the discharging decision variable can be set to o. In addition, if the electric vehicle is a V2G type, the sum of the charging decision variable and the discharging decision variable can be set to be greater than or equal to 0 and less than or equal to 1.

In addition, the function for the upper limit of charging/discharging amount considering a vehicle entry time can be set so that the charge capacity variable is less than or equal to the product of the charge upper limit power and the charge decision variable, and the discharge capacity variable can be set to be less than or equal to the product of the discharge upper limit power and the discharging decision variable. The charge upper limit power or the discharge upper limit power can be set considering the entry time of the electric vehicle.

The function for satisfying the customer-set target battery charging amount can be set such that the battery charging amount at a specific time can be set to be greater than or equal to the customer-set target battery charging amount, when the customer-set target battery charging amount exists at a specific time.

Additionally, when applying Vehicle to Home (V2H), the function to prevent reverse current can be set so that the sum of the predicted power usage in the home and the charging/discharging power of the electric vehicle at a specific time does not generate reverse current and does not exceed the upper power limit of the home.

On the other hand, when participating in the Plus DR market, the function for compliance with the winning power can be set considering the Contracted Power Capacity (CPC) of the previous day's successful bid and the Customer Baseline Load (CBL), which can be the basis for settlement. When participating in national DR, the function to recognize the amount of reduction up to the customer baseline power amount can be set considering the Customer Baseline Load (CBL), which can be the basis for settlement.

Additionally, the objective function can include a regular scheduling function considering the contract for difference and Plus DR market, and an irregular scheduling function considering the contract for difference, Plus DR market, and national DR market.

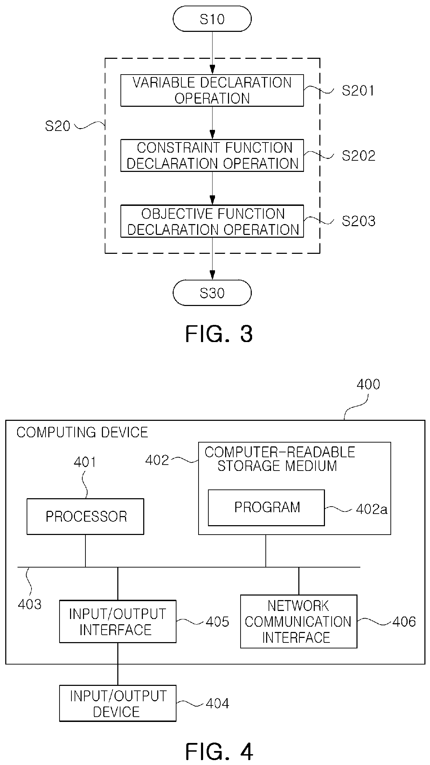

FIG. 3 is a flowchart of the scheduling model setting operation according to an embodiment of the present disclosure.

Referring to FIG. 3 together with FIG. 2, the scheduling model setting operation (operation S20) may include a variable declaration operation (operation S201), a constraint function declaration operation (operation S202), and an objective function declaration operation (operation S203).

In the variable declaration operation (operation S201), variables necessary for setting the scheduling model may be declared. For example, variable values such as the number of electric vehicles, upper limit charging power, and customer-required target charging amount may be set.

In the constraint function declaration operation (operation S202), the constraint function required for setting the corresponding scheduling model may be declared. Additionally, in the objective function declaration operation (operation S203), the objective function required for the regular scheduling function and the irregular scheduling function may be declared.

Constraint functions and objective functions may be declared to suit various situations, such as the presence or absence of regular scheduling, the presence or absence of irregular scheduling, participation in the real-time DR or bidding DR market, and the like.

Below, examples of the constraint function and the objective function are described in more detail.

## 1. <u>Constraint Function</u>

### 1.1 <u>Constraint function for charging or discharging function at every moment for each resource</u>

The charging/discharge binary variable constraint function according to resource type can be as follows.

$$\text{Set } T=48, \ X=\text{number of EVs}$$

$$\text{For } t=0 \text{ to } T \text{ do}$$

For x=0 to X do

If type of x==V1G or V2G?

If x==entry state?

If type of x==V1G?

$dv_{dch}{}^{x,t}$=0, $dv_{ch}{}^{x,t}$≤1 (discharging off, charging on)

else if type of x==V2G?

0≤ $dv_{ch}{}^{x,t}$+ $dv_{dch}{}^{x,t}$≤1 (discharging on, charging off)

Else #exit state

discharging off, charging off

In this example case, dv (Decision Variable) may refer to a charging/discharging decision variable, and ch(charge) may refer to charging, and dch(discharge) may refer to discharging.

The charging/discharging binary variable constraint function according to the EV resource type can determine whether the resource is an EV, determine the vehicle entry state, and, if the EV resource is in the vehicle entry state, charging/discharging can be limited according to the V1G/V2G type.

In the example case of V1G, discharging may be limited and charging may be allowed. In the example case of V2G, discharging and charging may be allowed.

Additionally, depending on the discharge efficiency for each EV, when the discharge efficiency is a certain value or less, discharging may be limited by setting the discharging decision variable to 0.

## 1.2 Upper limit decision function for Charging,discharging amount, considering vehicle entry time of resource

$$[\text{Equation 1}] \; ub_{ch}^{x,t} \times dv_{ch}^{x,t} \geq cv_{ch}^{x,t}$$

$$[\text{Equation 2}] \; ub_{dch}^{x,t} \times dv_{dch}^{x,t} \geq cv_{dch}^{x,t}$$

$$[\text{Equation 3}] \; \text{Where}, \; ub_{(d)ch}^{x,t} = ub_{(d)ch}^{\text{ev}} \times ratio^{x,t}$$

In Equations 1 to 3, ub (Upper Bound) may refer to the charge/discharge upper limit power, and cv (Capacity Variable) may refer to the charge/discharge capacity variable.

According to Equations 1 to 3, cv may be defined to be derived only within the upper limit power for each EV when declared as an optimization variable.

Additionally, in Equations 1 and 2, whether cv may have a value may be determined depending on whether dv has a value of 0 or 1. In addition, ub may be a value that is primarily processed by "ratio" in Equation 3, and 'ratio' in Equation 3 may be determined by the EV entry and exit time, and for example, may be set by the entry and exit ratio based on 60 minutes. For example, 'ratio' may be set to 1 for 60 minutes of parking and 0.5 for 30 minutes of parking at entry time t.

### 1.3 Customer-set target battery charge (SoC) satisfaction function

$$[\text{Equation } 4]\ SoC_{t+1}^x = SoC_t^x + (cv_{ch}^{x,t} \times \varepsilon_{ch}^x - cv_{dch}^{x,t}/\varepsilon_{dch}^x)/cap^x$$

$$[\text{Equation } 5]\ SoC_t^x \geq SoC_{target}^x\ \text{if, Existence of target SoC at } t$$

In Equation 4, $\varepsilon_{(d)ch}^x$ refers to the charging or discharging efficiency of the EV, and cap refers to the battery capacity of the EV.

According to Equation 4, the SoC change due to charging or discharging can be calculated based on the customer-set target battery state of charge (SoC) at time t, and the SoC at the next time t+1 can be calculated. The charge/discharge efficiency may be applied to the charge/discharge capacity variable and reflected in the SoC calculation.

In Equation 5, if there is a target SoC at time t, the SoC at that time should be limited to be equal to or greater than the target SoC. Due to this example constraint, the SoC calculated by Equation 4 up to the previous time may be derived considering that it meets the target SoC. According to Equation 5, higher priority may be given to meeting the target SoC set by the user rather than from a cost (profit) perspective.

### 1.4 Limitation of discharge of household load or more (Prevention of reversed power flow)

$$[\text{Equation } 6]\ 0 \leq P_{load}^{x,t} + cv_{ch}^{x,t} - cv_{dch}^{x,t} \leq ub_{load}^x$$

Equation 6 is a constraint function applied to the V2H concept in which the charge/discharge power of an EV charging station in the home can be added to the home meter.

In Equation 6, $P_{load}^{x,t}$ refers to the predicted power usage of user x at time t, and $ub_{load}^x$ refers to the upper limit of power that may be used at home.

Through Equation 6, the sum of home power use and charge/discharge power may be controlled so that it does not exceed the upper limit power of the home without causing a reverse current.

### 1.5. Compliance with winning bid power (CPC) when participating in Plus DR market

$$[\text{Equation } 7]\ Slack_{CPC}^t \leq \sum_{x=1}^{X}\{cv_{ch}^{x,t} - cv_{dch}^{x,t}\} - CBL^t$$

$$[\text{Equation } 8]\ Slack_{CPC}^t \leq 1.2 \times CPC^t$$

In Equations 7 and 8, Slack(CPC) refers to the response power recognized by KPX when settling DR participation profits, CBL (Customer Baseline Load) refers to the load that becomes the standard for settlement when participating in DR, and CPC (Contracted Power Capacity) refers to the power successfully bid (contracted) on the previous day.

Equation 7 refers to the increased power amount compared to CBL, and Equation 8 means that settlement is recognized up to 120% (the settlement up to 1.2 times is recognized under regulations) of the contracted capacity. Additionally, the settlement of the contracted plus DR market can be settled by the smaller value of Equation 7 and Equation 8. By using Equation 7 and Equation 8, optimization may be performed to increase Slack(CPC) in the objective function.

### 1.6 Restrictions on arbitrage services for resources directly connected to grid

$$[\text{Equation 9}] \; cv_{\text{ch}}^{x,t} - cv_{dch}^{x,t} \le slack_{sm}^{x,t}$$

$$[\text{Equation 10}] \; 0 \le slack_{sm}^{x,t}$$

Equation 9 and Equation 10 are example constraint functions applied to the V2G concept where the household power meter and the EV charger meter are separated.

In Equations 9 and 10, Slack(SM) refers to smart charging power, in more detail, power that can be recognized as being charged at the ToU price. According to Equation 10, even if a reverse current occurs, Slack(SM) may be settled by being limited to a positive number. In some cases, EV discharge is not restricted, but may not be recognized only at the time of settlement.

**1.7 Recognition of reductions up to Customer Baseline Load (CBL) power amount when participating in national DR**

$$[\text{Equation 11}] \; Slack_{km}^{t} \le CBL^{t} - \sum_{x=1}^{X}\left\{cv_{dch}^{x,t} - cv_{dch}^{x,t}\right\}$$

$$[\text{Equation 12}] \; Slack_{km}^{t} \le CBL^{t}$$

In Equations 11 and 12, $Slack_{km}^{t}$ may refer to the amount of reduction recognized when settling national DR, and the amount of reduction recognized for settlement may be determined by the smaller value of the right terms of Equation 11 and Equation 12.

Equation 11 refers to the reduction amount compared to CBL, and Equation 12 can mean that if the reduction amount is excessive, only up to CBL may be recognized as reduction amount. As in the constraint function described in 1.6, the amount of reduction exceeding CBL only at the time of settlement while not limiting EV charging/discharging may be set so that it is not settled.

**2. Design of optimization objective function**

**2.1 Objective function for regular scheduling**

$$[\text{Equation 13}] \; F_{\text{obj}}^{\text{batch}} = F_{\text{sm}} - F_{bid}^{plus} - F_{cpc}^{plus}$$

$$[\text{Equation 14}] \; F_{\text{sm}} = \sum_{t=1}^{T}\sum_{x=1}^{X}\left\{slack_{\text{sm}}^{x,t} \times \text{ToU}^{\text{x,t}}\right\}$$

$$[\text{Equation 15}] \; F_{bid}^{plus} = \sum_{t=1}^{T}\left\{(\sum_{x=1}^{X}\left\{cv_{\text{ch}}^{x,t} - cv_{dch}^{x,t}\right\} - CBL^{t}) \times \text{SMP}^{\text{t}}\right\}$$

$$[\text{Equation 16}] \; F_{cpc}^{plus} = \sum_{t=1}^{T}\left\{w_{cpc} \times slack_{cpc}^{t} \times \text{SMP}^{\text{t}}\right\}$$

Equation 13 is the cost function based on regular scheduling. The regular scheduling function may be optimally designed using Equations 13 to 16.

Equation 14 is the contract for difference (smart charging) cost function. Equation 14 is made up of the product of the ToU price and the power (SLACK) recognized as smart charging, and the power discharged according to Equations 9 and 10 is not calculated.

Equation 15 is the profit function for plus DR bidding. Equation 15 may define the expected profit as the product of the increase compared to CBL and SMP.

Equation 16 is the profit function upon compliance with Plus DR winning bid. Equation 16 generates profit at the SMP price when the power of the plus DR agreed on the previous day is increased.

Regular scheduling may be performed at the time of bidding and to comply with the winning bid power, respectively. At this time, the composition of the objective function may be different when bidding/winning.

When bidding, it can consist of Equation 13 = Equation 14 + Equation 15 + Equation 16, and when winning a bid, it can consist of Equation 13 = Equation 14 + Equation 16, which may be configured by excluding the bidding function. In some cases, the reason why the winning bid function (Equation 16) may be needed when bidding can be because power that was won the previous day may exist even at the time of bidding.

## 2.2 Objective function for irregular scheduling

$$[\text{Equation 17}] \; \mathrm{F}_{\mathrm{obj}}^{\mathrm{trigger}} = \mathrm{F}_{\mathrm{sm}} - F_{cpc}^{plus} - F_{rpc}^{plus} - F^{km}$$

$$[\text{Equation 18}] \; F_{rpc}^{plus} = \sum_{t=1}^{T}\{(\sum_{x=1}^{X}\{cv_{\mathrm{ch}}^{x,t} - cv_{d\mathrm{ch}}^{x,t}\} - CBL^{t}) \times \mathrm{SMP}^{t}\}$$

$$[\text{Equation 19}] \; F^{km} = \sum_{t=1}^{T}\{w_{km} \times slack_{km}^{t} \times \pi_{\mathrm{km}}^{\mathrm{t}}\}$$

Equations 17 to 19 are example objective functions for irregular scheduling. Referring to Equation 17, the objective function for irregular scheduling may be composed of four functions.

Equation 18 can be the profit function when participating in real-time plus DR, and the amount of power increased compared to CBL may be settled at the SMP price. In some cases, there may be no upper limit to the amount of increase due to regulations.

Equation 19 can represent the profit function upon national DR participation.

In Equation 19, $w_{km}$ refers to the weight that may control the activeness of national DR participation, $slack_{km}^{t}$ refers to the amount of reduction recognized during national DR settlement, and $\pi_{\mathrm{km}}^{\mathrm{t}}$ refers to the settlement price. For example, setting $w_{km}$ high can have the effect of increasing the settlement price of national DR, which may lead to more active participation in national DR.

According to Equation 19, the recognized reduction amount determined according to Equation 11 and Equation 12 may be settled according to the settlement price ( $\pi_{\mathrm{km}}^{\mathrm{t}}$ ), and may be recognized only for the reduction amount within the range of the CBL value or less.

Each function described above may be excluded or selected depending on the situation. For example, in the case of national DR issuance, in the case of real-time plus DR issuance, in the case of simple plug-in, or the like, the necessary function may be selected and defined depending on the situation.

On the other hand, FIG. 4 may be a block diagram of a computing device 400 that may fully or partially implement an electric vehicle charging/discharging scheduling device according to an embodiment of the present disclosure.

As illustrated in FIG. 4, the computing device 400 can include at least one processor 401, a computer-readable storage medium 402, and a communication bus 403, any combination of or all of which may be in plural or may include plural components thereof.

The processor 401 may enable the computing device 400 to operate according to the example embodiments mentioned above. For example, the processor 401 may execute one or more programs stored in the computer-readable storage medium 402. The one or more programs may include one or more computer-executable instructions, and the computer-executable instructions, when executed by the processor 401, may be configured to cause the computing device 400 to perform operations according to example embodiments.

The computer-readable storage medium 402 can be configured to store computer-executable instructions or program code, program data, and/or other suitable form of information. A program 402a stored in the computer-readable storage medium 402 can include a set of instructions executable by the processor 401. In an embodiment, the computer-readable storage medium 402 may be a memory (a volatile memory, such as a random access memory, a non-volatile memory, or an appropriate combination thereof), one or more magnetic disk storage devices, optical disk storage devices, flash memory devices, other forms of storage media that may be accessed by the computing device 400 and store required information, or any suitable combination thereof.

The communication bus 403 can interconnect various other components of the computing device 400, including the processor 401 and the computer-readable storage medium 402.

The computing device 400 may also include one or more network communication interfaces 406 and one or more input/output interfaces 405 providing an interface for one or more input/output devices 404. The input/output interface 405 and the network communication interface 406 can be connected to the communication bus 403.

The input/output device 404 may be connected to other components of the computing device 400 through the input/output interface 405. As an example, the input/output device 404 may include input devices such as pointing devices (such as a mouse, a trackpad or the like), keyboards, touch input devices (such as a touchpad, a touch screen, or the like), voice or audio input devices, various types of sensor devices and/or imaging devices, and/or output devices such as display devices, printers, speakers, and/or network cards. The illustrative input/output device 404 may be included within the computing device 400, as a component constituting the computing device 400, or may be connected to the computing device 400, as a separate device distinct from the computing device 400.

On the other hand, embodiments of the present disclosure may include a program for performing the methods described in this specification on a computer, and a computer-readable recording medium containing the program. The computer-readable recording medium may include program instructions, local data files, local data structures, and the like, singly or in combination. The medium may be those specifically designed and constructed for the present disclosure, or may be those commonly available in the computer software field. Examples of the computer-readable recording medium include magnetic media such as hard disks, floppy disks and magnetic tapes, optical recording media such as CD-ROM and DVD, and a hardware device specially configured to store and execute program instructions, such as ROM, RAM, flash memory, and the like. Examples of the programs may include not only machine language code such as that produced by a compiler, but also high-level language code that may be executed by a computer using an interpreter or the like.

Although representative example embodiments have been described in detail above, those skilled in the art can understand that various modifications may be made to the above-described example embodiments without departing from the scopes of the present disclosure. Therefore, the scopes of the present disclosure are not limited to the described example embodiments, but can be determined not only by the claims described below but also by equivalents to these claims.

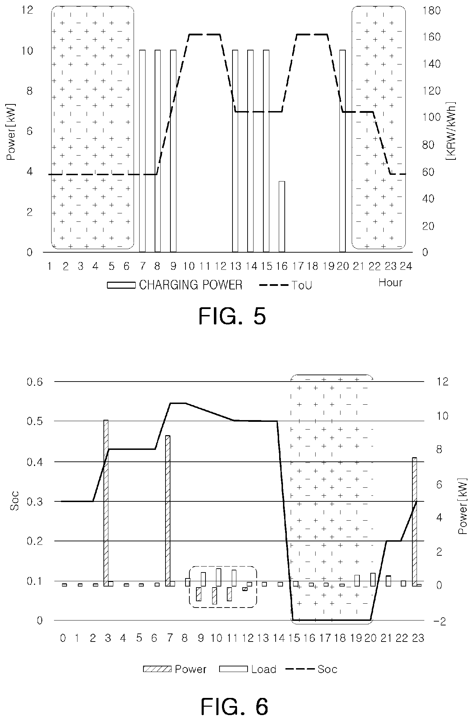

FIG. 5 is a graph illustrating smart charging scheduling according to an embodiment of the present disclosure.

Referring to FIG. 5, the electric vehicle was parked between 07:00 and 20:00. The SoC at initial entry may be set to 20%, and the target SoC for exit may be set to 90%, and because smart charging does not derive discharge behavior, discharge may not be considered.

Depending on the ToU power rate, charging may be done in the following order: light load > medium load > maximum load. By smart charging scheduling according to an embodiment, charging may be avoided between 10:00 and 12:00 when power rates are relatively high, and charging may be done at other times.

FIG. 6 is a graph illustrating contract-for-difference scheduling according to an embodiment of the present disclosure.

Referring to FIG. 6, the electric vehicle may be allowed to discharge through contract-for-difference scheduling. In some cases, the discharge power of the electric vehicle may be discharged to the extent to which it may replace the power load of the home. ToU charges may be avoided by discharging (-) as much as the household load at t=9-12, and discharge may be limited to prevent reverse currents from occurring by using the constraint function to prevent reverse currents.

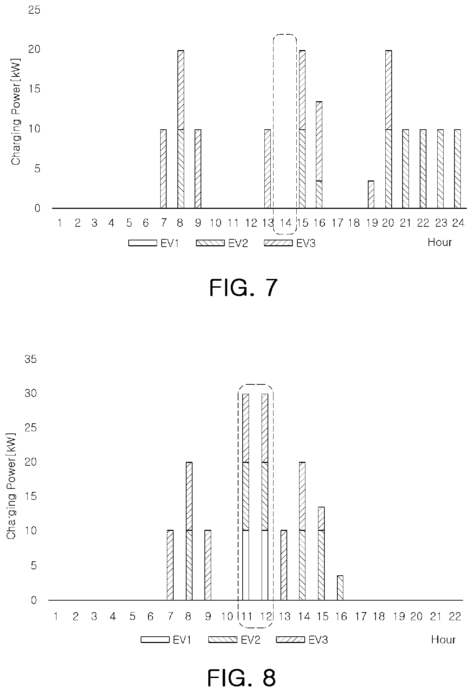

FIG. 7 is a graph illustrating scheduling when a national DR is issued according to an embodiment of the present disclosure.

Referring to FIG. 7, even if the previously set scheduling is set to charge at 14 o'clock, in the case in which the national DR is issued at t=14 o'clock, it may be set to standby without charging. In this example case, the power that was not charged at t=14 may be replenished by prioritizing later times when electricity prices are low.

FIG. 8 is a graph illustrating scheduling when Plus DR is issued according to an embodiment of the present disclosure.

Referring to FIG. 8, even if charging scheduling for 10kW for EV2 and 10kW for EV3 at t=11-12, as a total of 20kW, was previously set, in the case in which a real-time plus DR signal is issued at t=11-12, it may be set to charge an additional 10kW up to EV1.

When a real-time plus DR signal is issued, it may be optimized to increase SMP-based revenue generation by increasing an increase amount compared to CBL.

During t=11-12 hours, the ToU price was high, and thus charging was not done previously, but when participating in DR, the effect of being able to charge at a discounted price equivalent to the SMP price may be obtained.

Table 1 below shows the expected profit when scheduling according to an embodiment.

[Table 1]

|  | Existing Charging | Smart charging + Contract for Difference | National DR Participation | Plus DR Participation |
|---|---|---|---|---|
| Cost (day) | 4,531 | 3,041 (32%↓) | -10,984 (342%↓) | 660 (85%↓) |
| Cost (monthly) | 135,939 | 25,614 (81%↓)<br>National DR not applied:<br>81,716(39%↓) | | |

Referring to Table 1, when calculating daily costs, the cost can be reduced by 32% when applying smart charging and contract for difference per user, by 342% when participating in national DR, and by 85% when participating in Plus DR. Regarding national DR, simulation results showed that when national DR was issued, 10kW was reduced, and the entire amount of reduction was settled at the national DR price (KRW 1,300/kWh).

In addition, when calculating monthly costs, by way of an example, it was assumed that out of 30 days, 22 days would be for contract for difference, 4 days would be for national DR, and 4 days would be for plus DR, and it was calculated by referring to energy company H's 2022 national DR issuance history (number of times). Because real-time plus DR was recently enacted and has no history, it was calculated based on the national DR assumption in this example.

According to Table 1, compared to the existing charging, 32% cost can be reduced when smart charging (contract for difference), profits can be rather generated due to recognition of a large reduction amount (best case) in the case of national DR, and charging can be possible inexpensively due to the price being settled at the same level as SMP in the case of Plus DR. Therefore, it was confirmed that an 81% monthly cost reduction (39% reduction when national DR is not applied) can be possible through this service.

In describing the present disclosure, '- part' may be implemented in various manners, for example, by a processor, program instructions executed by the processor, software modules, microcode, computer program products, logic circuits, application-specific integrated circuits, firmware, or the like.

The contents of the method disclosed in the embodiments of the present disclosure may be directly implemented with a hardware processor, or may be implemented and completed through a combination of hardware and software modules among the processors. Software modules may be stored in storage media such as random access memory, flash memory, read only memory, programmable read only memory, or electrically erasable programmable memory, registers, and the like. The storage medium can be located in a memory, and the processor can read the information stored in the memory and complete the content of the method described above by being combined with the hardware. In this example case, detailed description can be omitted to prevent duplication.

As set forth above, according to an embodiment, an optimal scheduling method in which power charges may be significantly reduced and profits may be significantly increased may be derived by considering all of transaction for difference, smart charging, plus DR, and national DR.

In addition, according to an embodiment, a scheduling model may be set to suit a specific situation by modularizing a constraint function and an objective function used in the scheduling model.

While example embodiments have been illustrated and described above, it can be apparent to those skilled in the art that modifications and variations can be made without departing from the scopes of the present disclosure as defined by the appended claims.

**Claims**

1.　An electric vehicle charging and discharging scheduling method, comprising:

setting a scheduling model for charging/discharging an electric vehicle, based on a constraint function and an objective function considering a contract for difference, smart charging, a plus demand response (DR), and a national DR;
optimizing the set scheduling model; and
performing electric vehicle charging and discharging scheduling using the optimized scheduling model;
wherein the constraint function includes a function for at least one of or any combination of restrictions on charging/discharging for each electric vehicle, an upper limit on a charging/discharging amount considering a vehicle entry time, satisfaction of a customer-set target battery charging amount, prevention of a reversed power flow when applying Vehicle to Home (V2H), compliance with winning bid power when participating in a Plus DR market, restrictions on arbitrage services for resources directly connected to a grid, and recognition of an amount of reduction up to a customer baseline load power amount when participating in the national DR; and
wherein the objective function includes a regular scheduling function considering the contract for difference and the plus DR market, and an irregular scheduling function considering the contract for difference, the plus DR market, and a national DR market.

2. The method of claim 1, wherein a restriction function for the restrictions on charging/discharging for each electric vehicle is configured to set a charging decision variable and a discharging decision variable according to a V1G type or a V2G type in response to the electric vehicle is parked, wherein the V1G type is discharging being limited and charging being allowed, and wherein the V2G type is discharging and charging being allowed,

wherein the charging decision variable is set to be greater than or equal to 0 and less than or equal to 1 and wherein the discharging decision variable is set to be o, in response to the electric vehicle being the V1G type, and wherein a sum of the charging decision variable and the discharging decision variable is set to be greater than or equal to 0 and less than or equal to 1 in response to the electric vehicle being the V2G type.

3. The method of claim 1 or 2, wherein an upper limit function for the upper limit on the charging/discharging amount considering the vehicle entry time is set, such that a charging capacity variable is set to be less than or equal to a product of charging upper limit power and a charging decision variable, and a discharge capacity variable is set to be less than or equal to a product of discharge upper limit power and a discharging decision variable, and
wherein the charging upper limit power or the discharge upper limit power is set in consideration of an entry time of the electric vehicle.

4. The method of one of claims 1-3, wherein a satisfaction function for satisfaction of the customer-set target battery charging amount is set such that a battery charging amount at a specific time is set to be greater than or equal to the customer-set target battery charging amount in response to the customer-set target battery charging amount being present at the specific time.

5. The method of one of claims 1-4, wherein a prevention function for prevention of the reversed power flow when applying the V2H is set such that a sum of a predicted power usage in a home and charging/discharging power of the electric vehicle at a specific time does not generate the reversed power flow and does not exceed an upper power limit of the home.

6. The method of one of claims 1-5, wherein a complying function for complying with the winning bid power for participating in the Plus DR market is set in consideration of a Contracted Power Capacity (CPC) awarded on a previous day and a Customer Baseline Load (CBL) as a settlement standard.

7. The method of one of claims 1-6, wherein a recognition function for recognition of the amount of reduction up to the customer baseline load power amount for participating in the national DR is set in consideration of a Customer Baseline Load (CBL) as a settlement standard.

8. The method of one of claims 1-7, wherein the optimizing the scheduling model includes optimizing the scheduling model to significantly reduce power charges or significantly increase revenue using the constraint function and the objective function.

9. The electric vehicle charging and discharging scheduling method according to claim 1, wherein
optimizing the set scheduling model includes optimizing the set scheduling model to significantly reduce power charges or significantly increase revenue using the constraint function and the objective function.

10. The method of claim 9, wherein a restriction function for the restrictions on charging/discharging for each electric vehicle is configured to set a charging decision variable and a discharging decision variable according to a V1G type or a V2G type in response to the electric vehicle is parked, wherein the V1G type is discharging being limited and charging being allowed, and wherein the V2G type is discharging and charging being allowed,

wherein the charging decision variable is set to be greater than or equal to 0 and less than or equal to 1 and wherein the discharging decision variable is set to be o, in response to the electric vehicle being the V1G type, and wherein a sum of the charging decision variable and the discharging decision variable is set to be greater than or equal to 0 and less than or equal to 1 in response to the electric vehicle being the V2G type.

11. The method of claim 9 or 10, wherein an upper limit function for the upper limit on the charging/discharging amount considering the vehicle entry time is set, such that a charging capacity variable is set to be less than or equal to a product of charging upper limit power and a charging decision variable, and a discharge capacity variable is set to be less than or equal to a product of discharge upper limit power and a discharging decision variable, and
wherein the charging upper limit power or the discharge upper limit power is set in consideration of an entry time of the electric vehicle.

12. The method of one of claims 9-11, wherein a satisfaction function for satisfaction of the customer-set target battery charging amount is set such that a battery charging amount at a specific time is set to be greater than or equal to the customer-set target battery charging amount in response to the customer-set target battery charging amount being present at the specific time.

13. An electric vehicle charging/discharging scheduling device comprising:

   one or more processors; and
   a storage medium storing computer-readable instructions that, when executed by the one or more processors, enable the one or more processors to:

      set a scheduling model for charging/discharging an electric vehicle based on a constraint function and an objective function considering a contract for difference, smart charging, a plus Demand Response (DR), and a national DR,
      optimize the set scheduling model, and
      perform electric vehicle charging and discharging scheduling using the optimized scheduling model, wherein the constraint function includes a function for at least one of or any combination of restrictions on charging/discharging for each electric vehicle, an upper limit on a charging/discharging amount considering a vehicle entry time, satisfaction of a customer-set target battery charging amount, prevention of a reversed power flow when applying Vehicle to Home (V2H), compliance with winning bid power when participating in a Plus DR market, restrictions on arbitrage services for resources directly connected to a grid, and recognition of an amount of reduction up to a customer baseline load power amount when participating in the national DR, and wherein the objective function includes a regular scheduling function considering the contract for difference and the plus DR market, and an irregular scheduling function considering the contract for difference, the plus DR market, and a national DR market.

14. The device of claim 13, wherein the instructions further include a restrictions function for the restrictions on charging/discharging for each electric vehicle is configured to set a charging decision variable and a discharging decision variable according to a V1G type or a V2G type in response to the electric vehicle being parked, wherein the V1G type is discharging being limited and charging being allowed, wherein the V2G type is discharging and charging being allowed, wherein the charging decision variable is set to be greater than or equal to 0 and less than or equal to 1 and the discharging decision variable is set to be o, when the electric vehicle is a V1G type, and wherein a sum of the charging decision variable and the discharging decision variable is set to be greater than or equal to 0 and less than or equal to 1 when the electric vehicle is a V2G type.

15. The device of claim 13 or 14, wherein the instructions further include an upper limit function for the upper limit on the charging/discharging amount considering the vehicle entry time is set, such that a charging capacity variable is set to be less than or equal to a product of charging upper limit power and a charging decision variable, and a discharge capacity variable is set to be less than or equal to a product of discharge upper limit power and a discharging decision variable, wherein the charging upper limit power or the discharge upper limit power is set in consideration of an entry time of the electric vehicle.

DOMESTIC ELECTRICITY
MARKET — 10

↕

DEMAND MANAGEMENT
BUSINESS OPERATOR — 20

↕

V2X PLATFORM SERVICE — 30

↕

SERVICE USER GROUP — 40

## FIG. 1

START

↓

DATA INPUT AND
PRE-PROCESSING OPERATION — S10

↓

SCHEDULING MODEL SETTING
OPERATION — S20

↓

SCHEDULING MODEL OPTIMIZATION
OPERATION — S30

↓

DATA POST-PROCESSING AND
OUTPUT OPERATION — S40

↓

ELECTRIC VEHICLE CHARGING/
DISCHARGING SCHEDULING OPERATION — S50

↓

END

## FIG. 2

S10

VARIABLE DECLARATION
OPERATION — S201

S20

CONSTRAINT FUNCTION
DECLARATION OPERATION — S202

OBJECTIVE FUNCTION
DECLARATION OPERATION — S203

S30

FIG. 3

400

COMPUTING DEVICE

COMPUTER-READABLE
STORAGE MEDIUM — 402

PROGRAM — 402a

PROCESSOR — 401

403

INPUT/OUTPUT
INTERFACE — 405

NETWORK
COMMUNICATION
INTERFACE — 406

INPUT/OUTPUT
DEVICE — 404

FIG. 4

FIG. 5

FIG. 6

FIG. 7

FIG. 8

**EUROPEAN SEARCH REPORT**

Application Number

EP 24 19 0891

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 502 538 A (GUANGZHOU POWER SUPPLY BUREAU GUANGDONG POWER GRID CO LTD) 28 July 2023 (2023-07-28) * the whole document * | 1-15 | INV. G06Q10/04 B60L55/00 G06Q50/06 H02J3/00 |

TECHNICAL FIELDS
SEARCHED      (IPC)

G06Q
H02J
B60L

The present search report has been drawn up for all claims

| Place of search | Date of completion of the search | Examiner |
|---|---|---|
| Munich | 7 January 2025 | Chauvet, Christophe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 19 0891

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2025

| Patent document cited in search report | Publication date | Patent family member(s) | Publication date |
|---|---|---|---|
| CN 116502538 A | 28-07-2023 | NONE | |

EPO FORM P0459

For more details about this annex : see Official Journal of the European Patent Office, No. 12/82

**REFERENCES CITED IN THE DESCRIPTION**

**Patent documents cited in the description**

- KR 1020230184511